# EUROPEAN PATENT APPLICATION

(11) **EP 3 373 147 A1**
(43) Date of publication of application: **12.09.2018**
(21) Application number: 17159956.6
(22) Date of filing: 08.03.2017
(51) Int. Cl.: G06F 11/36, G06F 11/22

(54) **A UNIVERSAL PLATFORM FOR TESTING OF A PLURALITY OF ELECTRONIC DEVICES AND A METHOD THEREFOR**

(71) Applicant: Vestel Elektronik Sanayi ve Ticaret A.S., 45030 Manisa (TR)
(72) Inventor: GEBIZLI, Ceren Sahin, 45030 Manisa (TR); ÖCAL, Ömür, 45030 Manisa (TR)
(74) Representative: Ascherl, Andreas

(57) **Abstract**

The present invention refers to a universal platform for testing of a plurality electronic of devices and a method therefor. The platform of the present invention comprises test controller, and a command transmitting unit coupled with the test controller. The command transmitting unit is configured to transmit test signals to the device being tested. A response capturing unit records the response of the device after receiving the test signals. A command transmitting and log reading unit facilitates the changing of state of the device being tested to allow the testing of the device under different states. The platform and the method of the present invention facilitate the concurrent testing of the software modules as well as the hardware components of the device being tested.

## Description

This invention refers universal platform for testing a plurality of electronic devices according to claim 1, and a method for testing of a plurality of electronic devices according to claim 12.

### Background of the Invention

In recent times, consumer devices like televisions, set-top boxes, smart phones, refrigerators, and the like are facing a transformation from the conventional electromechanical systems to smart systems involving usage of different software modules. Manufacturing costs is generally one of the most important parameters that is to be considered while attempting to introduce any kind of a new product into the market. These costs also include the costs incurred at the testing phase.

Manual testing of devices involving a plurality of features is quite a tedious and a time consuming task. As such, automated testing systems have been developed in the art that facilitate the testing of the smart devices rather quickly and in an effective manner. A disadvantage associated with these conventional automated testing systems is that these systems are generally configured for testing specific types of devices. For example, a testing system configured to test a smart television cannot be used to test a smart phone. Different automated test systems for different devices have different test scripts, which are executed for the purpose of testing these devices. As such, there is need for an automated test system that can be used for the testing of different devices to reduce the costs associated with development of specific test systems associated with specific devices.

Prior art document US5754760 discloses a method of testing a software module using a genetic algorithm to generate a best test script. The software module has a number of possible states. A set of state machines is created which represent a definition for either a user interface or an application program interface (API) of the software module in terms of the possible states. From the state machines, a set of test cases is automatically generated, such that each test case consists of code for manipulating the user interface or API. A genetic algorithm creates populations of test scripts from the test cases, in which each test script includes a number of test cases. Each test script from each successive generation of test scripts is executed by applying the script as input to the software module. A code coverage analyzer provides a measure of code coverage to the genetic algorithm for each test script. The genetic algorithm uses the measure of code coverage as a fitness value in generating future populations of test scripts and in determining a best script.

However, the method disclosed in the prior art document US5754760 can only test a single software module, and any hardware on which the software is being run cannot be tested using this method. Furthermore, the method disclosed in the prior art document US5754760 also does not envisage testing of the software module concurrently with the hardware component on which the software is being run.

### Object of the Invention

It is therefore the object of the present invention to provide a universal platform for testing of a plurality electronic of devices and a method therefor, which facilitate the concurrent testing of software modules as well as hardware components of different electronic devices.

### Description of the Invention

The aforementioned object is achieved by a universal platform for testing of a plurality electronic of devices according to claim 1. The universal platform for testing of a plurality electronic of devices, according to the present invention, comprises a test controller that is communicatively coupled with a device from the plurality of devices. The test controller is configured to detect the device and run test scripts associated with the device to facilitate testing of the device.

A command transmitting unit is communicatively coupled with the test controller and the device. The command transmitting unit is configured to receive test signals from the test controller and transmit the test signals to the device. In an embodiment, the command transmitting unit is an infrared command transmitter.

A response capturing unit is communicatively coupled with the test controller and the device. The response capturing unit configured to capture a response of the device subsequent to the reception of the test signals. In an embodiment, the response capturing unit is selected from a group consisting of an image capturing unit, a sound capturing unit, and any combination thereof. The response capturing unit captures and provides a feed of the change in the visual state or a change in the sound profile of the device being tested, and transmits the captured information to the test controller.

A command transmitting and log reading unit is communicatively coupled with the test controller and the device, and is configured to receive state changing commands from the test controller and transmit the state changing commands to the device for facilitating testing of the device under different states. The command transmitting and log reading unit is further configured to log and read the response generated by the device being tested after receiving the state changing commands.

In an embodiment, the universal platform further comprises a power source for powering the universal platform.

In another embodiment, the universal platform further comprises a repository for storing test scripts associated with the testing of the plurality of electronic devices. In another embodiment, the repository is a cloud based repository.

In another embodiment, the test controller is selected from a group consisting of ASIC, FPGA, micro-controller, micro-processor, RISC processor, and any combination thereof.

The present invention also envisages a method for testing of a plurality of electronic devices, as claimed in claim 9. The method comprises the following steps:
- detecting a device from the plurality of devices for the purpose of testing the device;
- running test scripts associated with the device and thereby generating test signals for testing of the device;
- receiving and transmitting the test signals to the device;
- capturing a response of the device subsequent to the reception of the test signals; and
- generating and transmitting state changing commands to the device to facilitate testing of the device under different states;
- reading the response generated by the device being tested after receiving the state changing commands; and
- receiving the responses and indicating the condition of the device.

Further benefits, goals, and features of the present invention will be described by the following specification of the attached figures, in which components of the invention are exemplarily illustrated. Components of the devices and the method according to the invention, which match at least essentially with respect to their function can be marked with the same reference sign, wherein such components do not have to be marked or described in all figures.

The invention is just exemplarily described with respect to the attached figures in the following.

### Brief Description of the Drawings

- Fig. 1: illustrates a block diagram of a universal platform for testing of a plurality electronic of devices, in accordance with an embodiment of the present invention; and
- Fig. 2: illustrates a block diagram of a method for testing of a plurality of electronic devices, in accordance with an embodiment of the present invention.

### Detailed Description of the Drawings

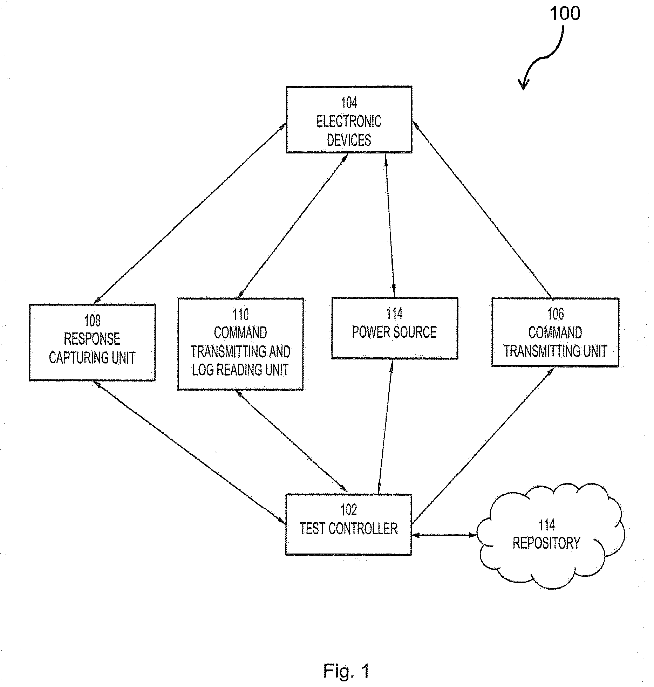

Fig. 1 illustrates a block diagram of a universal platform 100 (hereinafter referred to as platform 100) for testing of a plurality electronic of devices 104, in accordance with an embodiment of the present invention. The platform 100 comprises a test controller that is communicatively coupled with a device from the plurality of devices 104. The test controller 102 is configured to detect the device and run test scripts associated with the device to facilitate testing of the device. For example, if the device that is connected to the platform 100 for the purpose of testing is a smart television, then the test controller executes the test script associated with the testing of the smart television. In an embodiment, a common command is configured for the detection of the device being connected to the test controller 102. In this embodiment, the test controller 102 transmits the aforementioned common command to the device being tested. As such, the test controller 102 communicates with the source code of the device being tested to obtain a response from the device. It is from this response that the test controller 102 detects the type of the device that is being tested. The devices in the plurality of devices 104 include, but are not limited to, smart televisions, set-top boxes, smart phones, refrigerators, washing machines, dishwashers, air conditioners, cookers, and the like. In another embodiment, the test controller 102 is selected from a group consisting of ASIC, FPGA, micro-controller, micro-processor, RISC processor, and any combination thereof.

The platform 100 further comprises a command transmitting unit 106 that is communicatively coupled with the test controller 102 and the device 104. The command transmitting unit 106 is configured to receive the test signals generated by the test controller 102 on execution of the test scripts and transmit the test signals to the device 104. In an embodiment, the command transmitting unit 106 is an infrared command transmitter. More specifically, the command transmitting unit 106 performs the function of sending test signals which include, but are not limited to, on-off signals, brightness signals (in cases of smart phones, smart television, and the like), volume signals (in cases of smart phones, smart television, and the like), cooling signals (in cases of air conditioners, air coolers, refrigerators, and the like), and so on.

The platform 100 further comprises a response capturing unit 108 is communicatively coupled with the test controller 102 and the device 104. The response capturing unit 108 is configured to capture a response of the device 104 subsequent to the reception of the test signals. In an embodiment, the response capturing unit is selected from a group consisting of an image capturing unit, a sound capturing unit, and any combination thereof. The response capturing unit captures and provides a feed of the change in the visual state or a change in the sound profile of the device being tested, and transmits the captured information to the test controller. For example, if the device being tested is a smart television, and the test signal sent by the command transmitting unit 106 causes a change in the brightness of the smart television, the response capturing unit 108 captures the change of brightness in the smart television and reports the same to the test controller 102.

The platform 100 further comprises a command transmitting and log reading unit 110 is communicatively coupled with the test controller 102 and the device 104, and is configured to receive state changing commands from the test controller 102 and transmit the state changing commands to the device 104 for facilitating testing of the device under different states. The command transmitting and log reading unit 110 is further configured to log and read the response generated by the device being tested after receiving the state changing commands. A more detailed explanation of the operative configuration of the command transmitting and log reading unit 110 and the entire platform 100 has been described in the subsequent sections of the present document.

In an embodiment, the universal platform 100 further comprises a power source 112 for powering the universal platform 100. In an embodiment, the power source can either be a battery or direct AC supply.

The universal platform further comprises a repository 114 for storing the test scripts associated with the testing of the plurality of electronic devices 104. In another embodiment, the repository 114 is a cloud based repository.

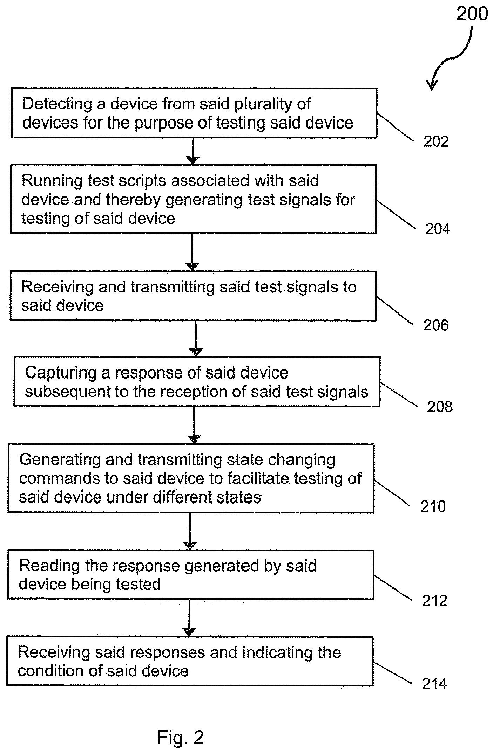

Fig. 2 illustrates a block diagram of a method for testing of a plurality of electronic devices 200 (hereinafter also referred to as method 200), in accordance with an embodiment of the present invention. The order in which the method 200 is described is not intended to be construed as a limitation, and any number of the described method blocks can be combined in any order to implement the method or any alternative methods. Additionally, individual blocks may be deleted from the method without departing from the spirit and scope of the subject matter described herein. Furthermore, the method can be implemented in any suitable hardware, software, firmware, or combination thereof.

As seen in Figure 2, the method 200 includes the steps that are described hereinafter.

At block 202, the method 200 includes the step of detecting a device from the plurality of devices 104 for the purpose of testing the device. In an embodiment, this step is performed by the test controller 102.

At block 204, the method 200 includes the step of running test scripts associated with the device and thereby generating test signals for testing of the device. In an embodiment, this step is performed by the test controller 102.

At block 206, the method 200 includes the step of receiving and transmitting the test signals to the device 104. In an embodiment, this step is performed by the command transmitting unit 106.

At block 208, the method 200 includes the step of capturing a response of the device 104 subsequent to the reception of the test signals. In an embodiment, this step is performed by the response capturing unit 108.

At block 210, the method 200 includes the step of generating and transmitting state changing commands to the device to facilitate testing of the device under different states. In an embodiment, this step is performed by command transmitting and log reading unit 110.

At block 212, the method 200 includes the step of reading the response generated by the device being tested after receiving the state changing commands. In an embodiment, this step is performed by the test controller 102.

At block 214, the method 200 includes the step of receiving the responses and indicating the condition of the device. In an embodiment, this step is performed by the test controller 102.

An exemplary operative configuration of the platform 100 in accordance with the steps of the method 200 is hereinafter described with the help of an example of testing a smart television by using the platform 100. It should be noted that the exemplary operative configuration described hereinafter should not be construed to be limiting.

In case of testing a smart television (hereinafter referred to as TV), the TV is connected to a serial port of the test controller 102. The test controller 102 communicates with the source code of the TV software to detect that the device that has been connected to the test controller 102 is actually a television. In an embodiment, the source code of the TV software is stored in a memory of the TV.

On detecting that the connected device is a TV, the test controller 102 executes a test script associated with the testing of the TV. The test controller 102 generates a variety of test signals for testing the TV. One of the test signals includes changing the brightness of the TV. The test signal is sent to the command transmitting unit 106, which further transmits the test signal to the TV. The change in the brightness is recorded by the response capturing unit 108. The response capturing unit 108, which is an image capturing unit in this case, provides the response of the TV to the test controller 102. The test controller 102 receives the response and compares the change in the brightness with a pre-stored look up table that is stored in the repository 114. If the change is the brightness corresponds to the values pre-fed in the look up table, then the test controller 102 indicates that the brightness changing module in the TV is working satisfactorily. In an embodiment, the test controller 102 is coupled with a display or a computer to indicate the conditions of the device being tested.

Certain specific commands, e.g., state changing commands cannot be transmitted to the device 104 by the command transmitter unit 106. These commands are instead fed to the device by the command transmitting and log reading unit 110. In the example of the TV, a typical smart TV operates in a number of states. For example, say a smart TV four HDMI ports. One of the HDMI port is connected to the set-top box, while another HDMI port is connected to a computer to facilitate the casting of the computer screen onto the TV. Now the main state of the smart TV is video state in which the different HDMI ports represent different sub-states. Another state of the smart TV is the operating system state of the smart TV. For example, the smart TV's usually come with pre-loaded operating systems like android operating system. The operating system state refers to the operation of the different applications which are installed on the android operating system of the smart TV. The aforementioned states are only exemplary, and there can be many such states in a smart TV. It is required that the smart TV be tested in each and every state. For this purpose, the state changing commands, generated by the test controller 102, facilitate the changing of states of the device being connected to the platform 100. As stated previously, the command transmitting and log reading unit 110 is also configured to read the response generated by the device being tested after receiving the state changing commands. More specifically, the command transmitting and log reading unit 110 needs to confirm that the state of the device being tested has actually been changed, and so the command transmitting and log reading unit 110 is configured to log and read the response of the device after receiving the state changing commands.

Another example of changing the state of the TV for the purposes includes the changing of the aspect ratio of the TV to view two separate video feeds on a same screen. In this case, the state changing command is generated by the test controller 102 and is fed to the command transmitting and log reading unit 110, which transmits the state changing command to the TV. In this case, the response of the TV can be recorded by the response capturing unit 108 as well as the command transmitting and log reading unit 110. The recorded responses are then fed to the test controller 102 which then indicates the condition of the TV for this particular test.

It should be noted that the aforementioned states of the TV that have been described are only exemplary. A typical smart TV, and for that matter most of the electronic appliances, have many such states. The platform 100 of the present invention facilitates the testing of the electronic appliances in all of their different states. Furthermore, the platform 100 of the present invention is such that the test script for any newly developed product only needs to be stored onto the repository 114 to facilitate the testing of the newly developed product. As such, a single platform 100 can be used to test a multitude of electronic appliances.

Furthermore, the different units of the platform 100 that have been so far described are only exemplary. Depending upon the application requirements, a person ordinarily skilled in the art, can add or subtract different units for achieving different functionalities. Such variations are inspired by the subject matter disclosed in the present invention, and would fall under the scope and ambit of the present invention.

Different characteristics and beneficial particulars are unfolded fully with reference to the embodiments/aspects which are exemplified in the accompanying drawing and detailed in the preceding description. Descriptions of techniques, methods, components, and equipment that a person skilled in the art is well aware of or those form common general knowledge in the field pertaining to the present subject matter is not described and/or introduced for the purpose of focusing on the present subject matter and not to obscure the present subject matter and advantageous features thereof. At the same time the present subject matter and its features that are explained herein in the detailed description and the specific examples, are given by way of illustration only, and not by way of limitation. It is to be understood that a person skilled in the art may and can think of various alternative substitutions, modifications, additions, and/or rearrangements which are considered to be within the spirit and/or scope of the underlying inventive concept.

In the present specification the word "comprise", or variations thereof, such as "comprises" or "comprising", imply the inclusion of a stated element, integer or step, or group of elements, integers or steps, but not the exclusion of any other element, integer or step, or group of elements, integers or steps.

Further, the use of the expression "at least" or "at least one" suggests the use of one or more elements or ingredients or quantities, as the use can be in the embodiment of the invention to achieve one or more of the desired objects or results.

The present invention thus refers to a universal platform for testing of a plurality electronic of devices and a method therefor. The platform of the present invention comprises test controller, and a command transmitting unit coupled with the test controller. The command transmitting unit is configured to transmit test signals to the device being tested. A response capturing unit records the response of the device after receiving the test signals. A command transmitting and log reading unit facilitates the changing of state of the device being tested to allow the testing of the device under different states. The platform and the method of the present invention facilitate the concurrent testing of the software modules as well as the hardware components of the device being tested.

### List of reference numbers

100 Universal Platform For Testing A Plurality Of Electronic Devices
102 Test Controller
104 Plurality Of Electronic Devices / Device
106 Command Transmitting Unit
108 Response Capturing Unit
110 Command Transmitting And Log Reading Unit 110
112 Power Source
114 Repository
200 A Method For Testing Of A Plurality Of Electronic Devices
202 Detecting a device from the plurality of devices for the purpose of testing the device
204 Running test scripts associated with the device and thereby generating test signals for testing of the device
206 Receiving and transmitting the test signals to the device
208 Capturing a response of the device subsequent to the reception of the test signals
210 Generating and transmitting state changing commands to the device to facilitate testing of the device under different states
212 Reading the response generated by the device being tested
214 Receiving the responses and indicating the condition of the device

## Claims

1. A universal platform (100) for testing a plurality of electronic devices, said platform (100) comprising:
a test controller (102) communicatively coupled with a device from said plurality of devices (104), said test controller (102) configured to detect said device and run test scripts associated with said device to facilitate testing of said device;
a command transmitting unit (106) communicatively coupled with said test controller (102) and said device, said command transmitting unit (106) configured to receive test signals from said test controller (102) and transmit said test signals to said device;
a response capturing unit (108) communicatively coupled with said test controller (102) and said device, said response capturing unit (108) configured to capture a response of said device subsequent to the reception of said test signals; and
a command transmitting and log reading unit (110) communicatively coupled with said test controller (102) and said device, said command transmitting and log reading unit (110) configured to receive state changing commands from said test controller (102) and transmit said state changing commands to said device for facilitating testing of said device under different states.

2. Universal platform (100) as claimed in claim 1, wherein said command transmitting and log reading unit (110) is further configured to log and read the response generated by said device being tested after receiving said state changing commands.

3. Universal platform (100) as claimed in claim 1, wherein said response capturing unit (108) is selected from a group consisting of an image capturing unit, a sound capturing unit, and a combination thereof.

4. Universal platform (100) as claimed in claim 1, further comprising a power source (112) for powering said universal platform (100).

5. Universal platform (100) as claimed in claim 1, further comprising a repository (114) for storing test scripts associated with the testing of said plurality of electronic devices (104).

6. Universal platform (100) as claimed in claim 5, wherein said repository (114) is a cloud based repository.

7. Universal platform (100) as claimed in claim 1, wherein said command transmitting unit is an infrared command transmitting unit.

8. Universal platform (100) as claimed in claim 1, wherein said test controller (102) is selected from a group consisting of ASIC, FPGA, micro-controller, micro-processor, RISC processor, and any combination thereof.

9. A method (200) for testing of a plurality of electronic devices, said method comprising the following steps:
detecting a device from said plurality of devices for the purpose of testing said device (202);
running test scripts associated with said device and thereby generating test signals for testing of said device (204);
receiving and transmitting said test signals to said device (206);
capturing a response of said device subsequent to the reception of said test signals (208);
generating and transmitting state changing commands to said device to facilitate testing of said device under different states (210);
reading the response generated by said device being tested after receiving said state changing commands (212);
receiving said responses and indicating the condition of said device. (214)
